# EUROPÄISCHE PATENTSCHRIFT

(11) **EP 2 151 552 B1**
(45) Veröffentlichungstag und Bekanntmachung des Hinweises auf die Patenterteilung: **28.07.2010**
(21) Anmeldenummer: 09009542.3
(22) Anmeldetag: 23.07.2009
(51) Int. Cl.: F01N 3/02, F01N 3/021, F01N 3/28

(54) **Abgasnachbehandlungselement zur Entfernung von Schadstoffen und/oder Partikeln aus dem Abgas einer Brennkraftmaschine**
Exhaust gas processing element for removal of contaminants and/or particulates from the exhaust gas of a combustion engine
Elément de traitement des gaz d'échappement destiné à la suppression de substances toxiques et/ou de particules à partir des gaz d'échappement d'un moteur à combustion interne

(30) Priorität: 06.08.2008 DE 102008036671; 22.09.2008 DE 102008048316
(43) Veröffentlichungstag der Anmeldung: 10.02.2010
(73) Patentinhaber: MAN Nutzfahrzeuge Aktiengesellschaft, 80995 München (DE)
(72) Erfinder: Döring, Andreas, 80339 München (DE)

(56) Entgegenhaltungen:
- WO-A-02/075125
- DE-A1- 4 014 214
- DE-A1- 4 201 426
- DE-A1- 19 731 987
- DE-U1- 8 812 762
- DE-U1- 20 117 659

## Beschreibung

Die Erfindung ein Abgasnachbehandlungselement zur Entfernung von Schadstoffen und/oder Partikeln aus dem Abgas einer Brennkraftmaschine eines Fahrzeuges nach dem Oberbegriff des Anspruchs 1.

Um die gesetzlichen Vorgaben bezüglich der Abgasgrenzwerte zu erfüllen, ist es bei Fahrzeugen mit Brennkraftmaschinen erforderlich, Abgasnachbehandlungssysteme, wie Katalysatoren, z. B. 3-Wege-Katalysatoren, SCR-Katalysatoren, NOx-Speicherkatalysatoren, oder Partikelabscheidern bzw. Partikelfiltern einzusetzen, die stromab von Brennkraftmaschinen in einem Abgasstrang angeordnet sind. Die Abgasnachbehandlungselemente werden meist als wabenförmige Substrate ausgebildet, die aus metallischen und untereinander verlöteten Folien oder aus einem keramischen Grundmaterial, das meist durch Extrusion hergestellt wird, bestehen. Diese Substrate werden von einem metallischen Mantel umgeben, über den sie in den Abgasstrang mithilfe von Flansch-, Schraub- oder Schweißverbindungen integriert werden. Bei metallischen Substraten wird die Verbindung zwischen dem Mantel und dem Substrat meist durch Schweißen oder Löten hergestellt. Bei keramischen Substraten, die besonders hoch empfindlich sind, wird die Verbindung dagegen mithilfe einer ausreichend hohen Pressung hergestellt. Um diese Pressung ohne Beschädigung der empfindlichen Substrate zu erreichen, werden zwischen dem Mantelrohr und dem Substrat meist keramische, glas- oder glimmerhaltige Matten angeordnet. Um eine ausreichend hohe Lebensdauer der Abgasnachbehandlungselemente sicherstellen zu können, werden die Mantelrohre üblicherweise aus ferritischem oder austenitischem Edelstahl hergestellt, wodurch eine hohe Korrosionsbestätigkeit gegenüber den zum Teil hochkorrosiven Abgasbestandteilen, wie z. B. Schwefelsäure, Salpetersäure und Ammoniak, erzielt werden kann.

Die Abgasnachbehandlungselemente müssen bereits kurz nach dem Kaltstart der Brennkraftmaschine voll funktionsfähig sein, um möglichst frühzeitig ihre Reinigungsfunktion erfüllen zu können. Dies macht jedoch eine schnelle Aufheizung der Abgasnachbehandlungselemente erforderlich. Um die für eine ausreichende Umsetzung der Schadstoffe erforderliche Temperatur, die sogenannte Anspringtemperatur, bei der 50% des erforderlichen Umsatzes erzielt werden, möglichst frühzeitig zu erreichen, werden Maßnahmen getroffen, die eine Temperaturerhöhung des Abgasstromes und damit eine schnelle Aufheizung der Abgasnachbehandlungselemente über diesen aufgeheizten Abgasstrom bewirken. Dies erfolgt z. B. durch Drosselung von Frischluft und/oder Abgas, durch Veränderung des Einspritzdruckes und/oder des Spritzbeginns und/oder der Abgasrückführungsrate und/oder durch eine elektrische Beheizung der Abgasnachbehandlungselemente. All diesen Maßnahmen ist jedoch gemein, dass sie zu einer Verschlechterung des Wirkungsgrades der Brennkraftmaschine und damit zu einem höheren Kraftstoffverbrauch führen.

Aus der DE 88 12 762 U1 ist bereits ein Katalysator mit einer Doppelrohranordnung bekannt, bei dem das Substrat in einem sehr dünnwandig ausgebildeten inneren Mantelrohr im Wesentlichen formschlüssig aufgenommen ist, wobei dieses innere Mantelrohr mit einem Spaltabstand von einem äußeren, demgegenüber dickeren Mantelrohr umgeben ist. In Längsrichtung des Katalysators gesehen sind das innere und das äußere Mantelrohr im Bereich der beiden gegenüberliegenden Katalysatorenden miteinander verbunden. Aus Gewichts- und Materialersparnisgründen kann das innere Mantelrohr aus einem gelochten Blech gebildet sein. Mit einem derartigen Aufbau sollen insbesondere in Verbindung mit großvolumigen Katalysatoraufbauten Beschädigungen der Substrate aufgrund der thermischen Wechselbelastungen vermieden werden, da das dünnwandige innere Mantelrohr sich aufgrund seiner Dünnwandigkeit gegenüber Einrohr-Mantelausbildungen schneller erwärmen kann und damit schneller auf das Temperaturniveau des Substrates gelangt, wodurch die thermischen Spannungen zwischen dem inneren Mantelrohr und dem Substrat reduziert werden können.

Der Nachteil eines derartigen Aufbaus liegt insbesondere darin, dass die mechanische Festigkeit des inneren Mantelrohres erheblich vermindert wird. Zudem führt die Ankopplung des äußeren Mantelrohres an das innere Mantelrohr zu einer Wärmebrücke, die die Wärme schnell vom inneren Mantelrohr auf das äußere Mantelrohr abfließen lässt, so dass die thermische Masse dieses Katalysators entgegen der Aussage in der DE 88 12 762 U1 weiter erhöht wird, was schließlich dazu führt, dass dieser Aufbau erheblichen thermischen Wechselspannungen ausgesetzt ist, was wiederum sehr schnell zu einer Beschädigung des Katalysators führen kann.

Aufgabe der vorliegenden Erfindung ist es daher, ein Abgasnachbehandlungselement zur Entfernung von Schadstoffen und/oder Partikeln aus dem Abgas einer Brennkraftmaschine zur Verfügung zu stellen, das auf funktionssichere und schnelle Weise auf eine erforderliche Betriebstemperatur aufgeheizt werden kann.

Diese Aufgabe wird gelöst mit den Merkmalen des Anspruchs 1.

Gemäß Anspruch 1 weist das wenigstens eine, eine wandseitige Durchgangsöffnung aufweisende Mantelrohr auf der dem Substrat abgewandten Rohraußenwand und/oder auf der dem Substrat zugewandten Rohrinnenwand wenigstens ein das Mantelrohr entlang einer vorgegebenen Mantelrohrlänge und entlang eines vorgegebenen Mantelrohrumfangsbereiches versteifendes Versteifungselement auf. Mit einer derartigen erfindungsgemäßen Versteifung des Mantelrohres kann in Verbindung mit einer Vielzahl von wandseitigen Durchgangsöffnungen eine vorteilhafte Absenkung bzw. Reduzierung der thermischen Masse des Mantelrohres, insbesondere im Vergleich zu einem keine derartigen Durchgangsöffnungen aufweisenden Mantelrohr bzw. im Vergleich zur Ausgestaltung gemäß der DE 88 12 762 U1 erzielt werden, wobei gleichzeitig durch eine gezielte Versteifung des Mantelrohres sichergestellt wird, dass dieses eine ausreichende mechanische Festigkeit für die im Fahrbetrieb auftretenden mechanischen Belastungen aufweist.

Die Versteifung mittels des wenigstens einen Versteifungselementes bewirkt dabei zudem, dass das Substrat im Inneren des Mantelrohres mit einer ausreichenden Pressung aufgenommen werden kann.

Die Versteifungselemente können auf der Außen- und/oder Innenseite des Mantelrohrs aufgebracht und/oder durch Umformung ausgebildet sein.

Das Mantelrohr weist in Rohrlängs- und Rohrumfangsrichtung gesehen eine Mehrzahl von voneinander beabstandeten wandseitigen Durchgangsöffnungen auf. Mit einer derartigen Mehrzahl von Durchgangsöffnungen lässt sich die thermische Masse des Mantelrohres deutlich reduzieren, so dass das Abgasnachbehandlungselement sehr schnell auf die notwendige Temperatur aufgeheizt werden kann.

Die wandseitigen Durchgangsöffnungen weisen dabei in Rohrlängs- und Rohrumfangsrichtung gesehen vorzugsweise einen jeweils gleichen Abstand voneinander auf. Alternativ oder zusätzlich dazu können sämtliche wandseitigen Durchgangsöffnungen eine gleiche Form und Größe aufweisen. Dadurch wird ein gleichmäßiges, regelmäßiges Muster der Durchgangsöffnungen erzielt, was sich fertigungstechnisch auf einfache Weise herstellen lässt.

Das Versteifungselement selbst ist bevorzugt durch eine Mehrzahl von stegartig von der Rohraußenwand abstehenden Versteifungsrippen ausgebildet. Diese Versteifungsrippen können sich z. B. als Längsrippen wenigstens abschnittsweise im Wesentlichen in Rohrlängsrichtung erstrecken. Beispielsweise kann sich in etwa in Rohrlängsrichtung gesehen eine Vielzahl von voneinander beabstandeten einzelnen Längsrippen über eine vorgegebene Wegstrecke in Rohrlängsrichtung erstrecken. Besonders bevorzugt ist dabei vorgesehen, dass sich für eine vollständige Versteifung des Mantelrohres die Längsrippen über die gesamte Rohrlänge erstrecken und zwar entweder abschnittsweise, wie zuvor geschildert, oder aber auch, wie dies herstellungstechnisch und fertigungstechnisch einfacher zu bewerkstelligen ist, mittels einstückiger, sich über die gesamte Rohrlänge erstreckender, durchgehender Längsrippen.

Alternativ oder zusätzlich zu diesen Längsrippen können die Versteifungsrippen aber auch als sich im Wesentlichen in Umfangsrichtung abschnittsweise um das Mantelrohr herum erstreckende Umfangsrippen ausgebildet sein. Auch hier ist wiederum bevorzugt, dass sich die Umfangsrippen für eine vollständige umfangsseitige Aussteifung im Wesentlichen vollständig über den gesamten Rohrumfang erstrecken. Auch dies kann hier wiederum abschnittsweise durch mehrere in Umfangsrichtung voneinander beabstandete Umfangsrippen oder aber bevorzugt durch eine einstückige über den gesamten Umfang umlaufende Umfangsrippe bezogen auf einen bestimmten Rohrumfangsbereich erfolgen.

Die Versteifungsrippen, sei es als Längsrippen und/oder als Umfangsrippen, können sich dabei sowohl geradlinig über die Rohrlänge bzw. den Rohrumfang erstrecken. Auch gewellte oder spiralförmig gewundene Anordnungen sind jedoch jederzeit denkbar und möglich.

Gemäß einer besonders bevorzugten Ausgestaltung ist vorgesehen, dass eine Mehrzahl von einander unter einem vorgegebenen Winkel schneidender Versteifungsrippen vorgesehen ist. Derartige Versteifungsrippen können sehr gut ein regelmäßiges, wabenförmiges Kreuzmuster ausbilden, wobei in den Waben dann die Durchgangsöffnungen ausgebildet sein können. Besonders bevorzugt ist vorgesehen, dass zwei Gruppen von im Wesentlichen parallel zueinander verlaufenden, unterschiedlichen Versteifungsrippen vorgesehen sind, wobei die Längsrippen der beiden Gruppen einander unter einem vorgegebenen Winkel kreuzen und schneiden, z. B. unter einem Winkel von 90°, und somit ein regelmäßiges Versteifungsmuster in Form von Rechtecken an der Rohraußenwand ausbilden. Selbstverständlich sind auch von 90° abweichende Winkel denkbar, wodurch sich ein Rauten- und/oder Dreieckmuster ergeben.

Ein derartiges Versteifungsmuster, wie eben beschrieben, bewirkt eine besonders optimale Biegesteifigkeit des Mantelrohres in Verbindung mit einer optimalen Substratpressungsmöglichkeit.

Wie die zuvor gemachten Ausführungen zeigen, ist der Begriff Versteifungsrippen hier somit in einem umfassenderen Sinne zu verstehen, das heißt, dass ausdrücklich auch wellenartige oder andere geometrische Formen von diesem Begriff umfasst sein sollen. Die Versteifungselemente können im einfachsten Fall einstückig mit dem Mantelrohr ausgebildet sein und aus diesem durch Umformen herausgebildet sein. Eine weitere Möglichkeit besteht darin, dass wenigstens eine Versteifungselement separat herzustellen und durch z. B. Schweißen, Nieten, durch Formschlussverbindungen oder durch Kraftschlussverbindungen am Rohrmantel zu fixieren.

Um ein Austreten von Abgas durch die mantelrohrseitigen Durchgangsöffnungen zu unterbinden, kann zwischen der Rohrinnenwand und den jeweiligen Durchgangsöffnungen eine diese verschließende gasundurchlässige Zwischenschicht angeordnet sein. Diese Zwischenschicht ist bevorzugt durch eine Folie, insbesondere durch eine Metallfolie, gebildet. Eine derartige Folie weist vorzugsweise lediglich eine Folienwandstärke von 0,02 bis 0,5 mm auf. Mit einer derartigen abdichtenden Folie mit geringer Wandstärke können die Durchgangsöffnungen im Mantelrohr zuverlässig abgedichtet werden, ohne dass die thermische Masse des Aufbaus insgesamt deutlich erhöht wird.

Grundsätzlich kann die Zwischenschicht aus mehreren verschiedenen, die Durchgangsöffnungen verschließenden Bauteilen, z. B. Folienstücken, ausgebildet sein. Herstellungs- und fertigungstechnisch einfacher ist es jedoch, wenn die Zwischenschicht, insbesondere eine Folie, einstückig ausgebildet ist und z. B. am Umfang umlaufend zwischen dem Substrat und der Innenwand des Mantelrohres angeordnet ist.

Alternativ zu dieser, den Gasaustritt in die Umgebung vermeidenden Maßnahmen mit einer Zwischenschicht kann zur Vermeidung des unkontrollierten Gasaustrittes auch vorgesehen sein, das Abgasnachbehandlungselement in einem Schalldämpfergehäuse aufzunehmen. Ein derartiges Schalldämpfergehäuse ist aufgrund der notwendigen Geräuschdämmung ohnehin im Abgasstrang enthalten, so dass das Schalldämpfergehäuse in einer vorteilhaften Doppelfunktion gleichzeitig auch den unkontrollierten Gasaustritt in die Umgebung verhindern kann. Da das Schalldämpfergehäuse ohnehin in den Abgasstrang zu integrieren ist, gelingt auf diese Weise die Abdichtung des Abgasnachbehandlungselementes massenneutral. Für den Fall, dass in dem Schalldämpfergehäuse eine Bypassströmung durch das gelochte Mantelrohr hindurch und damit an dem z. B. Katalysator- oder Partikelfiltersubstrat vorbei vermieden werden soll, ist bevorzugt zusätzlich die zuvor beschriebene Anordnung einer Zwischenschicht, bevorzugt einer Folie zwischen dem Substrat und der Innenwand des Mantelrohres vorzusehen. Durch die Kombination dieser beiden Maßnahmen, also der Abdichtung der Durchgangsöffnungen durch eine Zwischenschicht, insbesondere eine Folie, und die Integration des Abgasnachbehandlungselementes in ein Schalldämpfergehäuse wird gleichzeitig die bevorzugt dünne Folie als Zwischenschicht vor Beschädigungen, wie sie beispielsweise durch einen Steinschlag auftreten können, geschützt.

Eine weitere Möglichkeit, Bypassströmungen zu vermeiden, besteht darin, innerhalb des Schalldämpfers eine Trennung zwischen der Rein und eine Rohgasseite, z. B. mit Hilfe einer Trennwand, auszubilden und das Mantelrohr auf dessen Austrittsseite, stromab der Aussparungen, an der Trennwand gasdicht zu fixieren. Dadurch wird ein Gasaustritt bzw. eine Bypassströmung von ungereinigtem Abgas über die Durchgangsöffnungen auf die Reingasseite auf einfache Weise verhindert, da die Durchgangsöffnungen sich ausschließlich auf der Rohgasseite befinden.

Für den Fall, dass keine Integration in ein Schalldämpfergehäuse möglich sein sollte, können die Beschädigungen der Zwischenschicht bzw. der Schutzfolie und/oder der Substrate auch durch andere Maßnahmen vermieden werden: dies kann beispielsweise durch ein Schutzschild erfolgen, dass einen vorgegebenen Abstand von der Rohraußenwand und/oder von den dort angeordneten oder ausgebildeten Versteifungselementen aufweist. Der Schutzschild kann dabei das Mantelrohr ganz oder teilweise umschließen. Da sich ein derartiger Schutzschild nicht im direkten Kontakt mit dem Abgas befindet, muss es nicht, wie bei der DE 88 12 762 U1, aus Edelstahl ausgebildet werden, was erhebliche Kosteneinsparungen erlaubt. Zusätzlich können derartige Schutzschilder für die Isolierung der Abgasverrohrung dienen, wobei hierfür bevorzugt eine keramische, glas- und/oder quarzhaltige Isolationsschicht zwischen dem Mantelrohr und dem Schutzschild angebracht werden kann.

Für den Fall wiederum, dass das Anbringen derartige Schutzschilde nicht möglich sein sollte, kann das Mantelrohr lediglich in den Bereichen gelocht, das heißt mit Durchgangsöffnungen versehen werden, die nach dem Verbau des Abgasnachbehandlungselementes im Fahrzeug nicht mehr von unten her frei zugänglich sind, das heißt auf einer der Straße abgewandten und dem Fahrzeugunterbau zugewandten Seite der Rohraußenwand angeordnet bzw. ausgebildet sind.

Die Durchgangsöffnungen selbst können jede mögliche Geometrie und Form aufweisen, z. B. rund und/oder oval und/oder rechteckig und/oder dreieckig ausgebildet sein.

Bei den Abgasnachbehandlungselementen kann es sich um einen Katalysator oder einen Partikelabscheider oder einer Partikelfilter handeln. Werden für diese keramische Substrate verwendet, können die zur Fixierung in dem Mantelrohr benötigten, bevorzugt keramischen, glas- und/oder glimmerhaltigen Matten, die eine bevorzugt, jedoch nicht notwendigerweise radial umlaufende Befestigungsschicht ausbilden, analog zum Mantelrohr, gelocht werden. Das heißt, dass sich in diesem Fall dann die Durchgangslöcher auch durch die Befestigungsschicht hindurch erstrecken und diese durchdringen. Das Katalysatorsubstrat und/oder das Partikelfiltersubstrat und/oder das Partikelabscheidersubstrat können wiederum aus Keramik und/oder Metall und/oder keramischen Fasern und/oder Sintermetall und/oder quarzhaltigen Fasern und/oder Metallschaum bestehen.

Insbesondere in Verbindung mit einem Partikelfilter als Abgasnachbehandlungselement besteht die Gefahr, dass sich in diesem mit steigender Laufzeit Ascherückstände ansammeln, die zu einem Anstieg des Abgasgegendrucks führen und eine Reinigung des Partikelfilters erfordern. Zur besseren Wartung sollte daher das Substrat, insbesondere in Verbindung mit einem Partikelfilter als Abgasnachbehandlungselement, austauschbar ausgeführt werden.

Die Erfindung wird nachfolgend anhand einer Zeichnung näher erläutert.

Es zeigen:
- Fig. 1: eine schematische Außenansicht eines Katalysators mit jeweils unterschiedlichen Ausführungsformen eines mit Versteifungs- rippen versteiften Mantelrohrs,
- Fig. 2: schematisch einen Schnitt entlang der Linie A-A der Fig. 1,
- Fig. 3: schematisch einen Schnitt entlang der Linie A'-A' der Fig. 1,
- Fig. 4: schematisch einen Schnitt entlang der Linie B-B der Fig. 2,
- Fig. 5: schematisch einen Schnitt entlang der Linie C-C der Fig. 2,
- Fig. 6: schematisch eine alternative Ausführungsform gemäß Fig. 3 mit einem das Mantelrohr vollständig umgebenden Schutzschild, und
- Fig. 7: schematisch eine Ausgestaltung gemäß Fig. 3 mit lediglich in Richtung zum Fahrzeug gerichteten Durchgangsöffnungen.

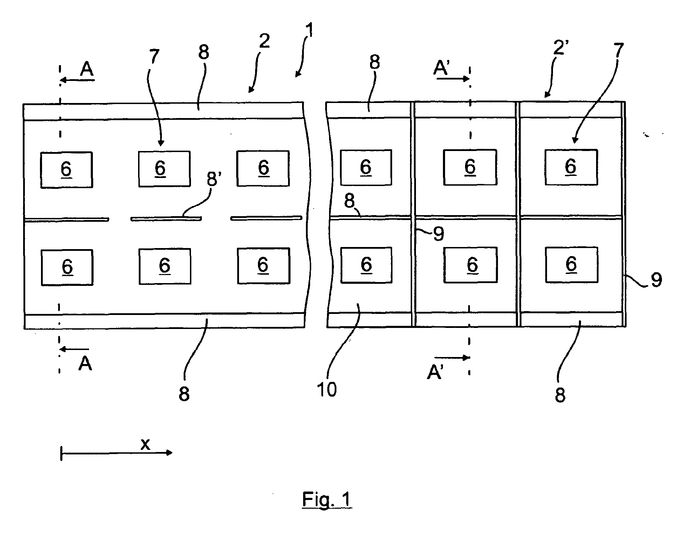

In der Fig. 1 ist schematisch eine Außenansicht eines nachfolgend nicht näher spezifizierten Katalysators 1 als Abgasnachbehandlungselement gezeigt. Die Beschreibung der konkreten erfindungsgemäßen Ausführungsformen anhand eines Katalysators als Abgasnachbehandlungselement ist hier als lediglich beispielhaft zu verstehen.

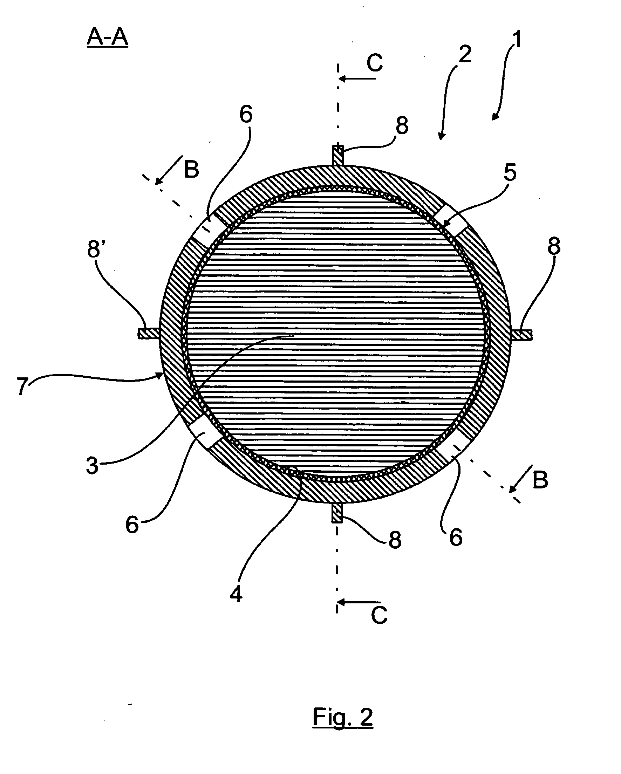

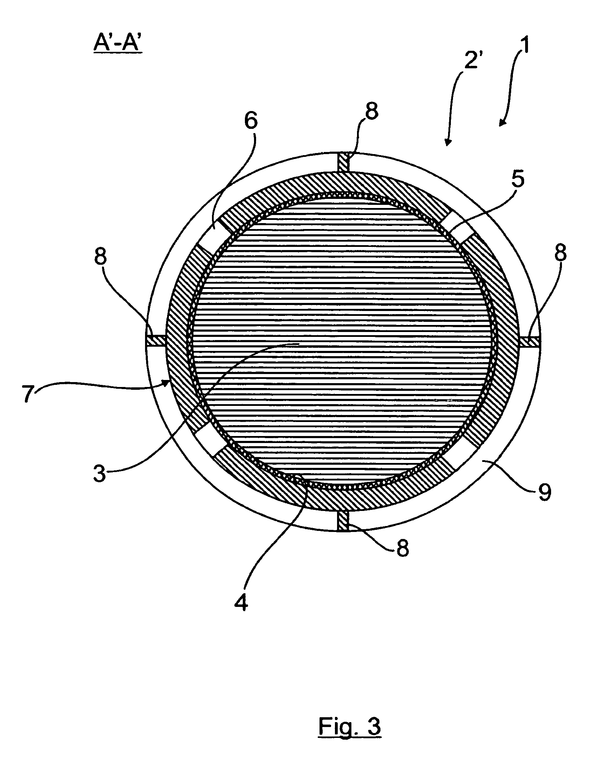

Dieser Katalysator 1 der Fig. 1 zeigt zwei verschiedene Ausführungsformen eines Mantelrohrs 2, 2', die nachfolgend in Verbindung mit den Fig. 2 und 3 näher erläutert werden.

Konkret besteht der Katalysator 1 aus einem Trägerkörper bzw. Substrat 3, das soweit nicht anders beschrieben, herkömmlicher Bauart ist.

Dieses Substrat 3 ist beispielsweise aus einem Keramikmaterial hergestellt und kann zudem mittels einer z. B. keramischen, glas- oder glimmerhaltigen Matte in dem Mantelrohr 2, 2' fixiert sein, was hier jedoch nicht dargestellt ist.

Das Substrat 3 ist, gegebenenfalls zusammen mit der zuvor beschriebenen Matte, formschlüssig und verpresst im Mantelrohr 2, 2' aufgenommen, wobei zudem zwischen einer Innenwand 4 des Mantelrohres 2, 2' und dem Substrat 3 eine dünne Metallfolie 5 vorgesehen ist, die hier lediglich aus zeichnerischen Gründen, der besseren Darstellung wegen, übertrieben dick dargestellt ist. Übliche Wandstärken für die Metallfolie sollen zwischen 0,02 mm und 0,5 mm betragen.

Die Metallfolie umfasst das Substrat 3 in Radialrichtung gesehen vollständig, so dass die mantelrohrseitig, hier in Umfangsrichtung gesehen, beispielhaft jeweils um 90° zueinander versetzten Durchgangsöffnungen 6 von der Substratseite her mittels der Metallfolie 5 gasdicht verschlossen sind und kein Abgas von der Substratseite her über die mantelrohrseitigen Durchgangsöffnungen 6 in die Umgebung außerhalb des Mantelrohres 2, 2' entweichen kann.

Wie dies insbesondere der Fig. 1 entnommen werden kann, sind zudem in Rohrlängsrichtung x gesehen eine Vielzahl von sich im Wesentlichen über die gesamte Rohrlänge erstreckenden und voneinander beabstandeten Durchgangsöffnungen 6 vorgesehen, so dass sich insgesamt ein Mantelrohr 2, 2' ergibt, das über die gesamte Mantelfläche gesehen ein gleichmäßiges Lochmuster aufweisen, wodurch die thermische Masse des Mantelrohres 2, 2' deutlich reduziert wird und damit der Katalysator 1 sehr schnell auf die erforderliche Betriebstemperatur aufgeheizt werden kann.

Um die mechanische Schwächung des Mantelrohres 2, 2' durch die Vielzahl der Durchgangsöffnungen 6 auszugleichen und eine optimale Pressung des Substrates 3 im Inneren des Mantelrohrs 2, 2' sowie eine gewünschte optimale Biegesteifigkeit des Mantelrohres 2, 2' zu erhalten, ist an der Außenwand 7 des in der linken Bildhälfte der Fig. 1 dargestellten Ausführungsbeispieles des Mantelrohres 2 eine Mehrzahl von in Umfangsrichtung (hier beispielhaft um 90°) voneinander beabstandeten Längsrippen 8 als Versteifungsrippen vorgesehen (Fig. 2), die sich beispielhaft über die gesamte Rohrlänge erstrecken können. Grundsätzlich könnten sich diese Längsrippen 8 in Rohrlängsrichtung gesehen auch lediglich abschnittsweise über die Rohrlänge erstrecken, wie dies beispielhaft für die bezogen auf die linke Bildhälfte der Fig. 1 mittlere Längsrippe 8' dargestellt ist. Auch andere Anordnungen der Längsrippen 8, z. B. gewellte, gebogene oder auch sich spiralförmig im Wesentlichen in Rohrlängsrichtung x erstreckende Anordnungen sind jederzeit möglich.

Wie dies insbesondere aus der Darstellung der Fig. 2 sehr gut ersichtlich ist, sind die Längsrippen 8, 8' jeweils mittig zwischen zwei in Umfangsrichtung voneinander beabstandeten Durchgangsöffnungen 6 angeordnet, das heißt somit im hier gezeigten Beispielfall um 45° gegenüber den Durchgangsöffnungen 6 versetzt angeordnet.

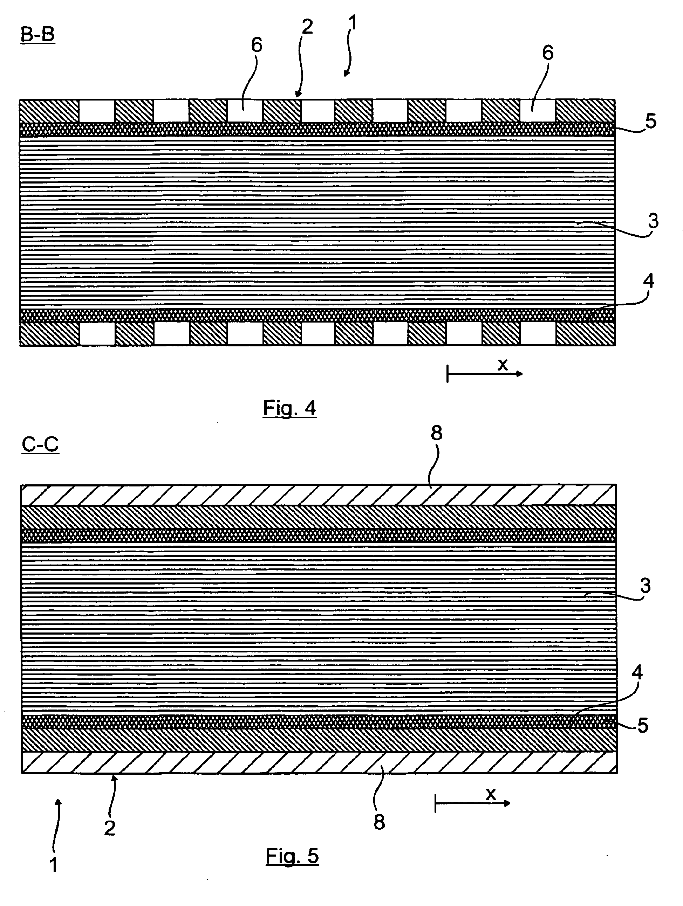

Die Fig. 4 und 5 zeigen jeweils Längsquerschnitte entlang der Linie B-B und C-C der Fig. 2, aus denen ebenfalls nochmals der Aufbau des Innenlebens des Katalysators 1 in Rohrlängsrichtung x gut ersichtlich ist.

Wie dies aus der, ein alternatives Ausführungsbeispiel zur eben beschriebenen Ausführungsform zeigenden rechten Bildhälfte der Fig. 1 in Verbindung mit der Fig. 3 ersichtlich ist, kann das Mantelrohr 2' zusätzlich zu den Längsrippen 8 auch mit diese Längsrippen 8 hier beispielhaft unter einem Winkel von 90° kreuzenden Umfangsrippen 9 versehen sein, die in Rohrlängsrichtung x gesehen voneinander bevorzugt einen jeweils gleichen Abstand aufweisen und zwischen zwei in Rohrlängsrichtung voneinander beabstandeten Durchgangsöffnungen 6 verlaufen. Diese Umfangsrippen 9 bewirken eine zusätzliche Versteifung und damit mechanische Festigkeit des Mantelrohres 2', ohne dass die thermische Masse des Katalysators 1 zu sehr erhöht wird.

Selbstverständlich sind auch hier sämtliche Arten von Kreuzungsmustern möglich, so z. B. solche Kreuzungsmuster, die bezogen auf die Waben 10 zu einer rautenförmigen und/oder dreieckigen Wabengeometrie führen, was hier allerdings nicht dargestellt ist. Zudem können sowohl die Längsrippen 8 als auch die Umfangsrippen 9 auch abweichend vom geradlinig in Umfangsrichtung bzw. in Rohrlängsrichtung x verlaufend gezeigten Ausführungsbeispiel über das Mantelrohr 2' verlaufen, z. B. mehr oder weniger spiralförmig um das Mantelrohr 2' herumgewunden sein. Auch dies ist hier nicht dargestellt. Desweiteren können auch bei dieser alternativen Ausgestaltung die Längsrippen 8 und die Umfangsrippen 9, z. B. in vorgegebenen Bereichen, lediglich abschnittsweise an der Außenwand 7 des Mantelrohres 2' vorgesehen sein, das heißt es können Unterbrechungen, wie z. B. in Verbindung mit der Längsrippe 8' zuvor erläutert, vorgesehen sein. Auch dies ist hier allerdings nicht explizit dargestellt.

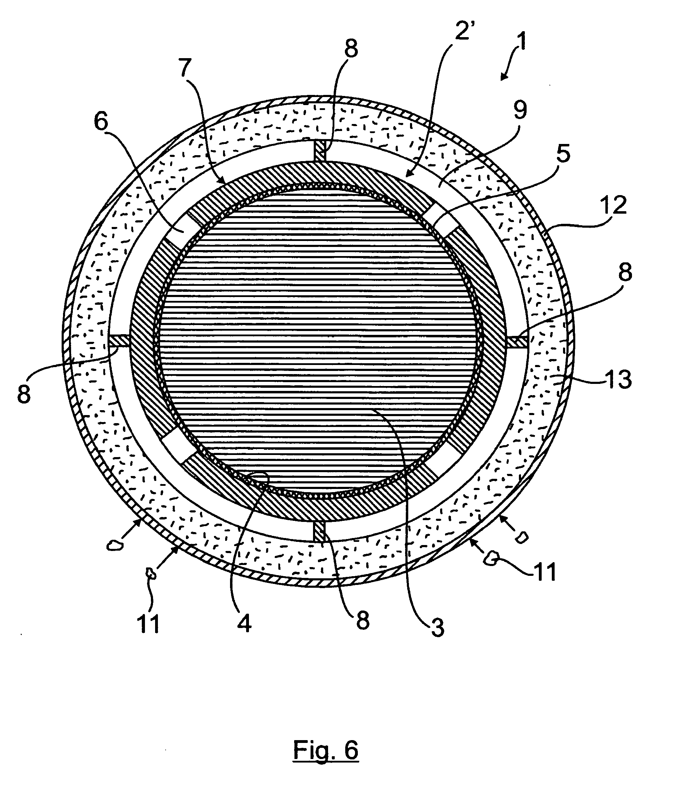

Um beispielsweise Beschädigungen der Metallfolie 5 durch Steinschlag 11 zu vermeiden, kann, wie dies in der Fig. 6 dargestellt ist, das hier beispielhaft ausgewählte Mantelrohr 2' von einem Schutzschild 12 umgeben sein. Der Schutzschild 12 ist hier so ausgebildet, dass es das Mantelrohr 2' vollständig umgibt, wobei zwischen dem Schutzschild und dem Mantelrohr 2' zudem eine Isolationsschicht 13 aus einem z. B. keramischen, glas- oder quarzhaltigem Material vorgesehen ist, so dass das Schutzschild 12 mitsamt Isolationsschicht 13 zudem eine Isolierung der Abgasverrohrung ausbildet. Mit einem derartigen Aufbau wird zuverlässig vermieden, dass Steinschlag 11 durch die Durchgangsöffnungen 6 hindurch tritt und zu einer Beschädigung der Metallfolie 5 führen kann.

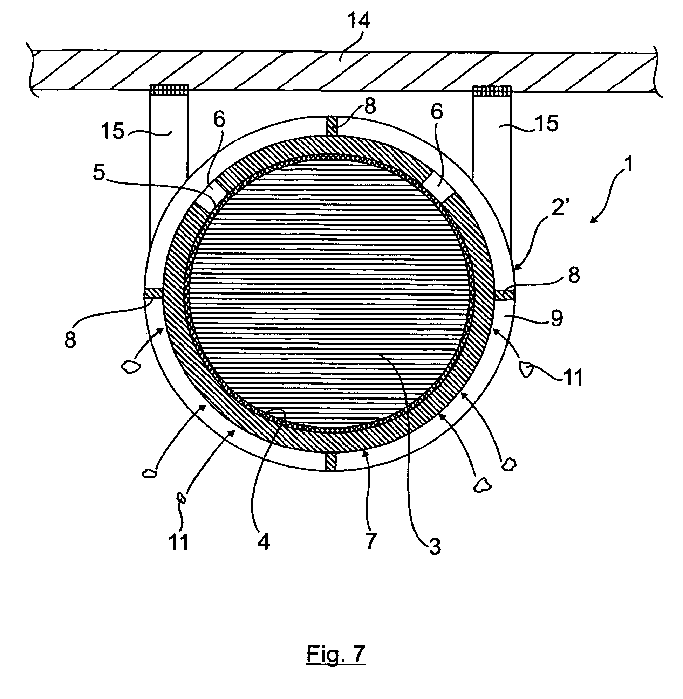

Für den Fall, dass kein derartiges Schutzschild angebracht werden kann, kann gemäß einer in der Fig. 7 dargestellten alternativen Ausgestaltung vorgesehen sein, die Durchgangsöffnungen 6 lediglich chassisseitig auf der einem Fahrzeugunterbau 14 zugewandten Seite des Mantelrohres 2' auszubilden. In der Fig. 7 ist hier zudem lediglich beispielhaft die Halterung des Katalysators 1 am Fahrzeugunterbau 14 über Halter 15 angedeutet.

## Patentansprüche

1. Abgasnachbehandlungselement zur Entfernung von Schadstoffen und/oder Partikeln aus dem Abgas einer Brennkraftmaschine, mit einem Trägerkörper oder Substrat, das in einem Mantelrohr, insbesondere formschlüssig oder über Löt- oder Schweißverbindungen, aufgenommen ist, wobei das Mantelrohr wenigstens eine wandseitige Durchgangsöffnung aufweist, **dadurch gekennzeichnet, dass** das Mantelrohr (2, 2') in Rohrlängs- und Rohrumfangsrichtung gesehen zur Verminderung der thermischen Masse eine Mehrzahl von voneinander beabstandeten wandseitigen Durchgangsöffnungen (6) aufweist und dass das Mantelrohr (2, 2') auf der dem Substrat (3) abgewandten Rohraußenwand (7) und/oder auf der dem Substrat zugewandten Rohrinnenwand (4) wenigstens ein das Mantelrohr (2, 2') entlang einer vorgegebenen Mantelrohrlänge und/oder entlang eines vorgegebenen Mantelrohrumfangsbereiches versteifendes Versteifungselement (8, 8', 9) aufweist.

2. Abgasnachbehandlungselement nach Anspruch 1, **dadurch gekennzeichnet, dass** die wandseitigen Durchgangsöffnungen (6) in Rohrlängs- und Rohrumfangsrichtung gesehen einen jeweils gleichen Abstand voneinander aufweisen, und/oder dass sämtliche wandseitigen Durchgangsöffnungen (6) eine gleiche Form und Größe aufweisen.

3. Abgasnachbehandlungselement nach einem der Ansprüche 1 oder 2, **dadurch gekennzeichnet, dass** als Versteifungselement eine Mehrzahl von stegartig von der Rohraußenwand und/oder der Rohrinnenwand abstehenden Versteifungsrippen (8, 8', 9) vorgesehen ist.

4. Abgasnachbehandlungselement nach Anspruch 3, **dadurch gekennzeichnet, dass** sich wenigstens ein Teil der Versteifungsrippen als Längsrippen (8, 8') wenigstens abschnittsweise im wesentlichen in Rohrlängsrichtung und/oder als Umfangsrippen (9) wenigstens abschnittsweise im Wesentlichen in Rohrumfangsrichtung erstreckt.

5. Abgasnachbehandlungselement nach Anspruch 3 oder 4, **dadurch gekennzeichnet, dass** eine Mehrzahl von einander unter einem vorgegebenen Winkel schneidenden Versteifungsrippen (8, 8', 9) vorgesehen ist.

6. Abgasnachbehandlungselement nach Anspruch 5, **dadurch gekennzeichnet, dass** zwei Gruppen von innerhalb jeder Gruppe im wesentlichen parallel zueinander verlaufenden, unterschiedlichen Versteifungsrippen (8, 8', 9) vorgesehen sind, wobei die Versteifungsrippen (8, 8', 9) der beiden Gruppen einander unter einem vorgegebenen Winkel kreuzen und schneiden und somit ein regelmäßiges Versteifungsmuster an der Rohraußenwand (7) ausbilden.

7. Abgasnachbehandlungselement nach Anspruch 6, **dadurch gekennzeichnet, dass** die Versteifungsrippen (8, 8', 9) ein regelmäßiges, wabenförmiges Kreuzmuster ausbilden, und dass in den Waben (10) die Durchgangsöffnungen (6) ausgebildet sind.

8. Abgasnachbehandlungselement nach einem der Ansprüche 1 bis 7, **dadurch gekennzeichnet, dass** zwischen dem Substrat (3) und der Rohrinnenwand (4) wenigstens eine wenigstens die vorhandenen Durchgangsöffnungen (6) verschließende gasundurchlässige Zwischenschicht (5) angeordnet ist.

9. Abgasnachbehandlungselement nach einem der Ansprüche 1 bis 8, **dadurch gekennzeichnet, dass** das Abgasnachbehandlungselement (1) in einem Schalldämpfergehäuse aufgenommen ist, wobei bevorzugt vorgesehen ist, dass das Abgasnachbehandlungselement (1) stromab der letzten Durchgangsöffnung gasdicht an das Schalldämpfergehäuse oder an eine Trennwand in dem Schalldämpfergehäuse fixiert ist, so dass sich innerhalb des Schalldämpfers eine Rohgasseite und eine Reingasseite ausbildet und die Durchgangsöffnungen auf der Rohgasseite liegen.

10. Abgasnachbehandlungselement nach einem der Ansprüche 1 bis 9, **dadurch gekennzeichnet, dass** das Mantelrohr (2, 2') wenigstens bereichsweise von einem Schutzschild (12) umgeben ist, das einen vorgegebenen Abstand von der Rohraußenwand (7) und/oder von den dort angeordneten oder ausgebildeten Versteifungselementen (8, 8', 9) aufweist, wobei bevorzugt vorgesehen ist, dass zwischen der Rohraußenwand (7) und dem Schutzschild (12) eine Isolationsschicht (13), vorzugsweise aus einem keramischen und/oder quarzhaltigen und/oder glashaltigen Material angeordnet ist.

11. Abgasnachbehandlungselement nach einem der Ansprüche 1 bis 10, **dadurch gekennzeichnet, dass** die wenigstens eine Durchgangsöffnung (6) im montierten Zustand des Abgasnachbehandlungselementes (1) auf einer der Straße abgewandten und dem Fahrzeugunterbau (14) zugewandten Seite der Rohraußenwand (7) angeordnet ist.

12. Abgasnachbehandlungselement nach einem der Ansprüche 1 bis 11, **dadurch gekennzeichnet, dass** zwischen einer Rohrinnenwand (4) oder einer Rohrinnenwand (4) und einer Zwischenschicht (5) zwischen der Rohrinnenwand (4) und dem Substrat (3) im Bereich der vorgesehenen Durchgangsöffnungen (6) eine vorzugsweise durch eine keramische und/oder glashaltige und/oder glimmerhaltige Matte gebildete, radial umlaufende Befestigungsschicht vorgesehen ist, mittels der das Substrat (3) im Mantelrohr (2, 2') fixiert ist.

13. Abgasnachbehandlungselement nach Anspruch 12, **dadurch gekennzeichnet, dass** sich die Durchgangsöffnungen (6) auch durch die Befestigungsschicht hindurch erstrecken und diese durchdringen.

14. Abgasnachbehandlungselement nach einem der Ansprüche 1 bis 13, **dadurch gekennzeichnet, dass** das wenigstens eine Versteifungselement (8, 8', 9) einstückig und materialeinheitlich mit dem Mantelrohr (2, 2') ausgebildet und aus diesem durch Umformen herausgebildet ist, oder dass das wenigstens eine Versteifungselement (8, 8', 9) durch ein separates Bauteil gebildet und mit dem Mantelrohr (2, 2') stoff- und/oder form- und/oder kraftschlüssig verbunden ist.

## Claims

1. An exhaust aftertreatment element for the removal of pollutants and/or particles from the exhaust of an internal combustion engine, with a support body or substrate which is held in a casing tube, in particular in positive manner or via soldered or welded joins, the casing tube having at least one wall-side passage opening, **characterised in that** the casing tube (2, 2'), viewed in the longitudinal and peripheral direction of the tube, has a plurality of spaced-apart wall-side passage openings (6) for reducing the thermal mass, and **in that** the casing tube (2, 2'), on the outer tube wall (7) remote from the substrate (3) and/or on the inner tube wall (4) facing the substrate, has at least one reinforcing element (8, 8', 9) which reinforces the casing tube (2, 2') along a predetermined casing-tube length and/or along a predetermined casing-tube peripheral region.

2. An exhaust aftertreatment element according to Claim 1, **characterised in that** the wall-side passage openings (6), viewed in the longitudinal and peripheral direction of the tube, have the same distance from each other in each case, and/or **in that** all the wall-side passage openings (6) are of the same shape and size.

3. An exhaust aftertreatment element according to one of Claims 1 or 2,
**characterised in that** a plurality of reinforcing ribs (8, 8', 9) which project in the manner of webs from the outer tube wall and/or the inner tube wall are provided as reinforcing elements.

4. An exhaust aftertreatment element according to Claim 3, **characterised in that** at least a portion of the reinforcing ribs extend as longitudinal ribs (8, 8') at least in sections substantially in the longitudinal direction of the tube and/or as peripheral ribs (9) at least in sections substantially in the peripheral direction of the tube.

5. An exhaust aftertreatment element according to Claim 3 or 4, **characterised in that** a plurality of reinforcing ribs (8, 8', 9) which intersect each other at a predetermined angle are provided.

6. An exhaust aftertreatment element according to Claim 5, **characterised in that** two groups of different reinforcing ribs (8, 8', 9) which extend substantially parallel to each other within each group are provided, the reinforcing ribs (8, 8', 9) of the two groups crossing and intersecting each other at a predetermined angle and thus forming as regular reinforcement pattern on the outer tube wall (7).

7. An exhaust aftertreatment element according to Claim 6, **characterised in that** the reinforcing ribs (8, 8', 9) form a regular, honeycomb-shaped cross pattern, and **in that** the passage openings (6) are formed in the honeycombs (10).

8. An exhaust aftertreatment element according to one of Claims 1 to 7,
**characterised in that** at least one gas-impermeable intermediate layer (5) which closes off at least the passage openings (6) which are present is arranged between the substrate (3) and the inner tube wall (4).

9. An exhaust aftertreatment element according to one of Claims 1 to 8,
**characterised in that** the exhaust aftertreatment element (1) is held in a silencer housing, with provision preferably being made for the exhaust aftertreatment element (1) to be fixed in gas-tight manner to the silencer housing or to a partition in the silencer housing downstream of the last passage opening, so that an untreated-gas side and a clean-gas side form within the silencer and the passage openings are located on the untreated-gas side.

10. An exhaust aftertreatment element according to one of Claims 1 to 9,
**characterised in that** the casing tube (2, 2') is surrounded at least in regions by a protective shield (12) which is at a predetermined distance from the outer tube wall (7) and/or from the reinforcing elements (8, 8', 9) arranged or formed there, with provision preferably made for an insulating layer (13), preferably made from a ceramic and/or quartz-containing and/or glass-contaming material, to be arranged between the outer tube wall (7) and the protective shield (12).

11. An exhaust aftertreatment element according to one of Claims I to 10, **characterised in that** the at least one passage opening (6) in the mounted state of the exhaust aftertreatment element (1) is arranged on a side of the outer tube wall (7) which is remote from the road and faces the vehicle chassis (14).

12. An exhaust aftertreatment element according to one of Claims 1 to 11, **characterised in that** a radially circumambient fastening layer preferably formed by a ceramic and/or glass-containing and/or mica-containing mat is provided between an inner tube wall (4) or an inner tube wall (4) and an intermediate layer (5) between the inner tube wall (4) and the substrate (3) in the region of the passage openings (6) provided, by means of which layer the substrate (3) is fixed in the casing tube (2, 2').

13. An exhaust aftertreatment element according to Claim 12, **characterised in that** the passage openings (6) also extend through the fastening layer and penetrate it.

14. An exhaust aftertreatment element according to one of Claims 1 to 13, **characterised in that** the at least one reinforcing element (8, 8', 9) is formed in one piece and of uniform material with the casing tube (2, 2'), and is formed out of the latter by shaping, or **in that** the at least one reinforcing element (8, 8', 9) is formed by a separate component and is connected to the casing tube (2, 2') by a material connection and/or in positive and/or in non-positive manner.

## Revendications

1. Elément de post-traitement de gaz d'échappement pour éliminer les composants toxiques et/ou les particules des gaz d'échappement émis par un moteur à combustion interne, comprenant :
- un organe de support ou substrat logé dans un tube-enveloppe, notamment par une liaison par la forme et/ou par une liaison soudée ou brasée,
- le tube-enveloppe ayant au moins un orifice traversant du côté de la paroi,
**caractérisé en ce que**
- le tube-enveloppe (2, 2') présente un ensemble de passages traversants (6) dans la paroi, ces passages étant écartés l'un de l'autre, dans la direction longitudinale et dans la direction périphérique du tube pour réduire la masse thermique, et
- le tube-enveloppe (2, 2') comporte sur sa paroi extérieure (7), non tournée vers le substrat (3) et/ou sur sa paroi intérieure (4) tournée vers le substrat, au moins un élément de rigidification (8, 8', 9) rigidifiant le tube-enveloppe (2, 2') suivant une longueur prédéfinie du tube-enveloppe et/ou le long d'une zone périphérique prédéfinie du tube-enveloppe.

2. Elément de post-traitement de gaz d'échappement selon la revendication 1,
**caractérisé en ce que**
les passages (6) côté paroi, sont équidistants à la fois dans la direction longitudinale et dans la direction périphérique du tube, et/ou tous les passages traversants (6) ont la même forme et les mêmes dimensions.

3. Elément de post-traitement de gaz d'échappement selon la revendication 1 ou 2,
**caractérisé en ce que**
l'élément de rigidification est constitué par un ensemble de nervures de rigidification (8, 8', 9) en forme d'entretoises venant en saillie de la paroi extérieure du tube et/ou de la paroi intérieure du tube.

4. Elément de post-traitement de gaz d'échappement selon la revendication 3,
**caractérisé en ce qu'**
au moins une partie des nervures de rigidification sont des nervures longitudinales (8, 8') s'étendant au moins par segment principalement dans la direction longitudinale du tube et/ou des nervures périphériques (9) s'étendant au moins par segment pratiquement dans la direction périphérique du tube.

5. Elément de post-traitement de gaz d'échappement selon la revendication 3 ou 4,
**caractérisé par**
un ensemble de nervures de rigidification (8, 8', 9), se coupant selon un angle prédéfini.

6. Elément de post-traitement de gaz d'échappement selon la revendication 5,
**caractérisé par**
deux groupes de nervures de rigidification (8, 8', 9), différentes, essentiellement parallèles dans chacun des groupes,
les nervures de rigidification (8, 8', 9) des deux groupes se croisant selon un angle prédéfini et se coupant pour former ainsi une trame de rigidification, régulière de la paroi extérieure (7) du tube.

7. Elément de post-traitement de gaz d'échappement selon la revendication 6,
**caractérisé en ce que**
les nervures de rigidification (8, 8', 9) développent un motif croisé régulier, en nids d'abeilles, et
les passages traversants (6) sont réalisés dans les maillons (10).

8. Elément de post-traitement de gaz d'échappement selon l'une des revendications 1 à 7,
**caractérisé par**
au moins une couche intermédiaire (5) étanche aux gaz, fermant les passages (6) entre le substrat (3) et la paroi intérieure (4) du tube.

9. Elément de post-traitement de gaz d'échappement selon l'une des revendications 1 à 8,
**caractérisé en ce que**
l'élément de post-traitement des gaz d'échappement (1) est logé dans un boîtier d'isolation phonique,
il est prévu de préférence que l'élément de post-traitement des gaz d'échappement (1) est fixé en aval du dernier passage traversant, de manière étanche au boîtier d'isolation phonique ou à une cloison dans le boîtier d'isolation phonique de façon à réaliser dans le dispositif d'isolation phonique, un côté de gaz non nettoyés et un côté de gaz nettoyés et les passages se situent sur le côté des gaz non nettoyés.

10. Elément de post-traitement de gaz d'échappement selon l'une des revendications 1 à 9,
**caractérisé en ce que**
le tube-enveloppe (2, 2') est entouré au moins par zone par un écran protecteur (12) situé à une distance prédéfinie de la paroi extérieure (7) du tube et/ou des éléments de rigidification (8, 8', 9) installés ou réalisés à cet endroit et il est prévu de préférence une couche d'isolation (13) entre la paroi extérieure (7) du tube et l'écran de protection (12), cette couche d'isolation étant de préférence en une matière céramique et/ou elle contient du quartz et/ ou du verre.

11. Elément de post-traitement de gaz d'échappement selon l'une des revendications 1 à 10,
**caractérisé en ce qu'**
à l'état installé des éléments de post-traitement des gaz d'échappement (1), au moins un passage traversant (6) se trouve sur un côté de la paroi extérieure (7) du tube tourné vers le dessous du châssis (14) du véhicule, et du côté opposé de la chaussée.

12. Elément de post-traitement de gaz d'échappement selon l'une des revendications 1 à 11,
**caractérisé en ce qu'**
au niveau des passages traversants (6), entre la paroi intérieure (4) du tube ou entre une paroi intérieure (4) et une couche intermédiaire (5) entre la paroi intérieure (4) et le substrat (3), il y a une couche de fixation périphérique radiale, formée de préférence par une nappe céramique et/ou contenant du verre et/ou du mica, pour fixer le substrat (3) dans le tube-enveloppe (2, 2').

13. Elément de post-traitement de gaz d'échappement selon la revendication 12,
**caractérisé en ce que**
les passages traversants (6) s'étendent également dans la couche de fixation et traversent celle-ci.

14. Elément de post-traitement de gaz d'échappement selon l'une des revendications 1 à 13,
**caractérisé en ce qu'**
au moins un élément de rigidification (8, 8', 9) est réalisé en une seule pièce et dans la même matière que le tube enveloppe (2, 2'), et est réalisé dans celui-ci, par déformation, ou au moins un élément de rigidification (8, 8', 9) est réalisé comme pièce séparée, et est relié au tube enveloppe (2, 2') par une liaison par la matière et/ou par la forme et/ou par la force.
